(19) Europäisches Patentamt
European Patent Office
Office européen des brevets

(11) **EP 2 663 416 B1**

(12) **EUROPÄISCHE PATENTSCHRIFT**

(45) Veröffentlichungstag und Bekanntmachung des Hinweises auf die Patenterteilung:
**05.05.2021 Patentblatt 2021/18**

(21) Anmeldenummer: **12702772.0**

(22) Anmeldetag: **09.01.2012**

(51) Int Cl.:
**B23B 29/12** (2006.01)   **B06B 3/00** (2006.01)

(86) Internationale Anmeldenummer:
**PCT/EP2012/050230**

(87) Internationale Veröffentlichungsnummer:
**WO 2012/095385 (19.07.2012 Gazette 2012/29)**

(54) **VERFAHREN UND VORRICHTUNG ZUR ERZEUGUNG EINER SCHWINGENDEN BEWEGUNG EINER MASSE**

METHOD AND DEVICE FOR PRODUCING A VIBRATING MOTION OF A MASS

PROCÉDÉ ET DISPOSITIF POUR CONFÉRER UN MOUVEMENT OSCILLANT À UNE MASSE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.01.2011 DE 102011008576**

(43) Veröffentlichungstag der Anmeldung:
**20.11.2013 Patentblatt 2013/47**

(73) Patentinhaber: **Dr. Hielscher GmbH**
**14513 Teltow (DE)**

(72) Erfinder:
• **HIELSCHER, Holger**
**14513 Teltow (DE)**

• **HIELSCHER, Harald**
**14532 Stahnsdorf (DE)**
• **HIELSCHER, Thomas**
**14467 Potsdam (DE)**

(74) Vertreter: **Gulde & Partner**
**Patent- und Rechtsanwaltskanzlei mbB**
**Wallstraße 58/59**
**10179 Berlin (DE)**

(56) Entgegenhaltungen:
**JP-A- 58 165 902    JP-A- 61 236 401**
**US-A- 4 856 391     US-A1- 2004 245 893**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren sowie eine Vorrichtung zur Erzeugung einer schwingenden Bewegung eines Werkzeuges.

Zur Erzeugung von mechanischen Schwingungen fester Massen ist deren Erregung durch Erregerschwingungen, wie zum Beispiel Ultraschall, bekannt.

Es offenbart die DE 100 27 264 C5 einen Ultraschallwandler, bei dem ein Schwinger, der mit Ultraschall angeregt werden kann, zwischen als Spannkörpern ausgebildeten Massen angeordnet ist. Durch das Resonanzverhalten des Schwingers kommt es zu Schwingungen zwischen den Massen. In der US 2004/245893 A1 ist eine Ultraschalltransducervorrichtung mit einer Halteeinrichtung für ein Verstärkerhorn offenbart.

Weiterhin ist es als bekannt anzusehen, dass Massen an oder auf einem Resonanzkörper befestigt werden, und dieser Resonanzkörper einer Erregerschwingung ausgesetzt wird, so dass es zur Eigenschwingung des Resonanzkörpers kommt und dadurch die daran befestigte Masse ebenfalls in Schwingung versetzt wird. Dabei kann die zusätzliche Masse an dem resonanten Körper mittels einer Schraube oder eines Klemmstückes, welches mit einer Schraube verspannt wird, befestigt werden. Andere Fixierungsmöglichkeiten sind die Verlötung der Masse bzw. Verschweißung, Verklebung oder formschlüssige Aufnahme durch Einschrumpfung und/oder Verpressung.

Werden derartige Gebilde auf die Resonanzfrequenz des resonanten Körpers gebracht, treten in Abhängigkeit von der Resonanzfrequenz und der Schwingungsamplitude sowie in Abhängigkeit vom Gewicht der jeweiligen Massen entsprechende Beschleunigungskräfte auf. Das Befestigungsmittel in Form der Schraube, Klemmung oder des formschlüssig aufnehmenden Materials muss die Trägheitskräfte aufnehmen. In Abhängigkeit von der jeweiligen Bewegungsrichtung der Masse entstehen somit Zugspannungen im Befestigungsmittel, die sich insbesondere bei längerer Dauer der Schwingung sowie bei hohen Frequenzen materialermüdend auswirken können. Derartige Materialermüdungen können bis zur plastischen Verformung und/oder zum Bruch des Befestigungsmittels führen.

Das heißt, insbesondere durch die herrschenden Zugspannungen im Befestigungsmittel sind der Größe bzw. Gewicht der zu beschleunigenden Masse bzw. deren Frequenz und Amplitude Grenzen gesetzt.

Der Erfindung liegt somit die Aufgabe zugrunde, ein Verfahren sowie eine Vorrichtung zur Erzeugung einer schwingenden Bewegung einer relativ schweren Masse mit hoher Frequenz und/oder hoher Amplitude in kostengünstiger und einfacher Form zur Verfügung zu stellen. Diese Aufgabe wird erfindungsgemäß durch das Verfahren zur Erzeugung einer schwingenden Bewegung eines Werkzeuges gemäß Anspruch 1 sowie durch die Vorrichtung zur Erzeugung einer schwingenden Bewegung eines Werkzeuges gemäß Anspruch 4 gelöst.

Vorteilhafte Ausgestaltungen des erfindungsgemäßen Verfahrens sind in den Unteransprüchen 2 und 3 angegeben. Vorteilhafte Ausgestaltungen der erfindungsgemäßen Vorrichtung sind in den Unteransprüchen 5 bis 7 angegeben. Ergänzend wird ein Verfahren zur Bearbeitung eines Werkstückes unter Anwendung des erfindungsgemäßen Verfahrens zur Erzeugung einer schwingenden Bewegung gemäß Anspruch 8 zur Verfügung gestellt. Eine vorteilhafte Ausgestaltung dieses Verfahrens zur Bearbeitung eines Werkstückes ist in Unteranspruch 9 angegeben.

Erfindungsgemäß wird ein Verfahren zur Erzeugung einer schwingenden Bewegung eines Werkzeuges, zur Verfügung gestellt, wobei das Werkzeug im Folgenden auch als Masse bezeichnet und in Schwingungsausbreitungsrichtung zwischen wenigstens zwei Spannkörpern mit diesen mechanisch verbunden ist und die Masse von beiden Spannkörpern mit Anpresskraft beaufschlagt eingespannt ist, und zumindest die Spannkörper als Bestandteil eines Resonanzsystems ausgebildet sind, und in das Resonanzsystem ein Erregerschwingung eingeleitet wird, deren Frequenz mit der Resonanzfrequenz des Resonanzsystems im Wesentlichen übereinstimmt, so dass das Resonanzsystem schwingt. Die Schwingung ist dabei bevorzugt eine stehende Welle mit einer definierten Ausbreitungsrichtung. Die Masse ist in Schwingungsausbreitungsrichtung zwischen den Spannkörpern angeordnet und eingespannt. Vorzugsweise sollte die Erregerfrequenz völlig mit der Resonanzfrequenz übereinstimmen. Für die Praxis sind jedoch Abweichungen der Erregerfrequenz von der Resonanzfrequenz zulässig, wobei die Erregerfrequenz $fs$ im Bereich von $fs = 0,8 \ldots 1,2 \; fr$ liegen kann. Mit $fr$ ist dabei die Resonanzfrequenz definiert.

Dabei ist die Resonanzfrequenz im Wesentlichen mit der jeweiligen Eigenfrequenz gleichzusetzen, solange keine Dämpfung im System angeordnet ist. Dadurch, dass eine ständige Erregung vorgesehen ist, sind geringfügige Dämpfungen, wie zum Beispiel durch mechanische Kontaktierung der schwingenden Masse mit einem weiteren Gegenstand, vernachlässigbar. Ist jedoch tatsächlich eine sich auf die Schwingung der Masse wesentlich auswirkende Dämpfung vorhanden, ist der Dämpfungsfaktor mit der jeweiligen Eigenfrequenz zu verrechnen, und derart die Resonanzfrequenz zu bestimmen.

Auf Grund der mechanischen Verbindung der Masse mit den Spannkörpern schwingt bei einem Resonanzverhalten der Spannkörper auch die Masse mit derselben Frequenz und der Amplitude. Die beiden resonant abgestimmten Spannkörper mit zumindest annähernd der gleichen Resonanzfrequenz bilden somit zumindest teilweise das Resonanzsystem aus.

Der Vorteil des erfindungsgemäßen Verfahrens liegt insbesondere darin, dass durch die Positionierung und Einspannung der Masse zwischen den Spannkörpern die Masse in der Schwingung der Spannkörper mitgenommen wird, wobei sie jeweils durch eine von jeweils einem Spannkörper bewirkte Druckkraft in die Richtung des jeweils anderen Spannkörpers verschoben wird. Das heißt, dass die Masse bei positiver Amplitude der Schwingung von einem ersten Spannkörper, der zum Beispiel dichter am Schwingungserreger angeordnet sein kann als ein zweiter Spannkörper, in Richtung des zweiten Spannkörpers verschoben wird und bei schwingungsbedingter Umkehr der translatorischen Bewegung, und demzufolge negativer Amplitude, vom zweiten Spannkörper wieder in Richtung des ersten Spannkörpers verschoben wird.

Es treten somit keine Zugkräfte an der Masse und/oder einem der Spannkörper auf, sondern es wirken ausschließlich Druckkräfte auf die Masse. Dem Fachmann ist hinlänglich bekannt, dass die zulässigen Druckspannungen der meisten festen Materialen wesentlich höher sind als die zulässigen Zugspannungen. Unter zulässigen Zug- bzw. Druckspannungen werden die Spannungen verstanden, die ein Körper aus dem jeweiligen festen Material ertragen kann, ohne sich plastisch zu verformen.

Bei einer Schwingung einer Masse mit einer relativ hohen Frequenz und hoher Amplitude sind die größten Kräfte, die auf diese Masse wirken, die Trägheitskräfte, die abhängig von ihrer Größe (bzw. Gewicht) und ihrer Beschleunigung sind. Je größer nun die zulässigen Spannungen sind, umso größer können die auf die Masse wirkenden zulässigen Kräfte sein. Wenn die Masse dabei konstant ist, kann somit die Beschleunigung der Masse umso größer eingestellt werden. Das bedeutet bei einer Schwingung, dass die Masse mit einer größeren Frequenz und/oder größerer Amplitude schwingen kann, als es bei herkömmlichen Masseschwingungen der Fall ist. Es lässt sich somit erfindungsgemäß eine schwerere Masse mit herkömmlicher Frequenz oder Amplitude beschleunigen, oder umgekehrt lässt sich eine herkömmliche Masse mit höherer Frequenz und größerer Amplitude beschleunigen. Dies ermöglicht neue Bearbeitungstechnologien und/oder verkürzte Bearbeitungszeiten bei auf Schwingung basierenden Technologien.

In einer Ausführungsform des erfindungsgemäßen Verfahrens ist vorgesehen, dass das Resonanzsystem durch die Spannkörper ausgebildet ist, so dass ausschließlich die Spannkörper von der Erregerschwingung erregt werden. Das heißt, dass die Frequenz der Erregerschwingung, die eingeleitet wird, der Resonanzfrequenz des aus den Spannkörpern gebildeten Resonanzsystems entspricht. In dieser Ausgestaltung ist die Masse, die zwischen den Spannkörpern fixiert ist, nicht Bestandteil des Resonanzsystems und wird demzufolge nicht selbst durch die Erregerschwingung direkt erregt. Dies kann zum Beispiel dadurch realisiert sein, dass die Eigenfrequenz der Masse eine andere ist als die Erregerfrequenz. Die Masse kann vorteilhafterweise als ein Werkzeug ausgebildet sein. Das heißt, dass die als Werkzeug ausgebildete Masse zwischen den Spannkörpern von diesen Spannkörpern in eine schwingende Bewegung versetzt wird, wobei die schwingende Bewegung des Werkzeuges für einen Bearbeitungsvorgang ausgenutzt werden kann. Die Masse ist dabei also nicht Bestandteil einer das Verfahren ausführenden Vorrichtung, die die Schwingung erzeugt.

In alternativer Ausgestaltung ist vorgesehen, dass das Resonanzsystem durch die Spannkörper und die Masse ausgebildet ist, so dass die Spannkörper und die Masse von der Erregerschwingung erregt werden. Das heißt, dass in dieser Ausgestaltung die Frequenz der Erregerschwingung, die eingeleitet wird, der Resonanzfrequenz des aus den Spannkörpern sowie der Masse gebildeten Resonanzsystems entspricht. Es wird dabei die Masse durch die Erregerfrequenz genauso erregt wie die Spannkörper. Erfindungsgemäß wird des Weiteren eine Vorrichtung zur Erzeugung einer schwingenden Bewegung einer Masse zur Verfügung gestellt, die die Masse, welche insbesondere ein Werkzeug sein kann, umfasst und ein Resonanzsystem umfasst, mit dem die Masse beschleunigbar ist. Die Vorrichtung umfasst einen Schwingungserzeuger, mit dem eine Erregerschwingung erzeugbar ist, deren Frequenz mit der Resonanzfrequenz des Resonanzsystems im Wesentlichen übereinstimmt. Erfindungsgemäß sind wenigstens zwei Spannkörper Bestandteil des Resonanzsystems, wobei die Masse mit den Spannkörpern derart mechanisch verbunden ist, dass sie zwischen den Spannkörpern fixiert ist, wobei die Masse von beiden Spannkörpern mit Anpresskraft beaufschlagt eingespannt ist.

Das heißt, dass die Masse bei Anwendung einer longitudinalen Schwingung in Schwingungsausbreitungsrichtung zwischen den Spannkörpern fixiert ist. Die erfindungsgemäße Vorrichtung dient insbesondere zur Durchführung des erfindungsgemäßen Verfahrens. Es kann dabei, wie oben angegeben, vorgesehen sein, dass das Resonanzsystem ausschließlich durch die Spannkörper ausgebildet ist, oder dass das Resonanzsystem durch die Spannkörper zusammen mit der Masse ausgebildet ist. Als Schwingungserzeuger wird bevorzugt ein Ultraschallwandler verwendet, so dass die Erregerschwingungen Ultraschallschwingungen sind.

Es ist vorgesehen, dass die Masse von den beiden Spannkörpern mit Anpresskraft beaufschlagt eingespannt ist. Diese Ausgestaltung dient insbesondere der Ausführung der Erfindung, bei der das Resonanzsystem durch die Spannkörper und die Masse ausgebildet ist. Die Spannkörper und die Masse schwingen mit der Anpresskraft synchron als resonantes System, so dass keine Ablösung einer der Spannkörper von der Masse zu befürchten ist. Daher muss auch keine Anordnung einer mechanischen, Zugkraft übertragenden Einrichtung zwischen den Spannkörpern vorgesehen sein. Gegebenenfalls kann die kraftschlüssige Fixierung der Masse mit einer formschlüssigen Aufnahme der Masse kombiniert sein. Die Anpresskraft wird dabei vorzugsweise in die Spannkörper an einer nahezu schwingungsfreien Stelle der Spannkörper, wie zum Beispiel an einem Schwingungsknoten, bei dem ein Null-Durchgang des Schwingungsverlaufes zu verzeichnen ist, eingeleitet. Diese Einspannung an den Null-Durchgängen ist vorzugsweise bei beiden Spannkörpern realisiert.

In einer Ausgestaltung der erfindungsgemäßen Vorrichtung ist vorgesehen, dass zwischen den Spannkörpern eine mechanische Verbindung vorhanden ist, mit der Zugkraft zwischen den Spannkörpern übertragbar ist. Diese mechanische Verbindung kann die Masse zwischen den Spannkörpern durchdringen oder diese überbrücken. Es existiert in Ausbreitungsrichtung der Schwingung eine parallele Anordnung der Masse und der mechanischen Verbindung zwischen den Spannkörpern. Die mechanische Verbindung ist vorzugsweise eine Schraubverbindung, das heißt, eine mechanische Verbindung, die gegebenenfalls auch eine Anpresskraft auf die Masse ausüben kann. Durch diese Anpresskraft wird neben der formschlüssigen Fixierung der Masse auch eine kraftschlüssige Fixierung realisiert. Die Position der mechanischen Verbindung und damit auch der Masse ist vorzugsweise an einem Maximum, das heißt der Stelle der jeweiligen maximalen Schwingungsamplitude der beiden Spannkörper. Diese Ausgestaltung kann bei beiden Ausführungsformen, das heißt, wenn das Resonanzsystem ausschließlich durch die Spannkörper ausgebildet ist, oder wenn das Resonanzsystem durch die Spannkörper und die Masse ausgebildet ist, realisiert sein. Durch die synchrone Bewegung der Spannkörper bei deren Resonanzverhalten werden die aus den dynamischen Belastungen der mechanischen Verbindung resultierenden Spannungen gering gehalten.

In einer einfachen Ausführungsform der erfindungsgemäßen Vorrichtung ist vorgesehen, dass beide Spannkörper als translatorische Schwinger ausgebildet sind. Demzufolge sind beide Spannkörper durch die Einspannung der Masse auf Druck und Knickung belastet. Vorzugsweise sind dabei die beiden Spannkörper mittels einer Spannhülse miteinander verbunden, wobei die Spannhülse Spannkräfte an den Stellen in die Spannkörper einträgt, an denen die bereits erwähnten Null-Durchgänge der Schwingung zu verzeichnen sind.

Alternativ können die Spannkräfte auch hydraulisch oder pneumatisch aufgebracht werden.

In einer alternativen Ausgestaltung der Vorrichtung kann vorgesehen sein, dass wenigstens einer der Spannkörper als Biegeschwinger ausgestaltet ist. Die erfindungsgemäße Vorrichtung ist in dieser Ausführungsform ein Schwingsystem, bestehend aus einem translatorischen Schwinger und einem Biegeschwinger. Erfindungsgemäß wird außerdem ein Verfahren zur Bearbeitung von fester oder flüssiger Materie unter Anwendung des erfindungsgemäßen Verfahrens zur Erzeugung einer schwingenden Bewegung einer Masse zur Verfügung gestellt, wobei die Masse als ein Werkzeug ausgebildet ist, welches auf Grund seiner schwingenden Bewegung einen Bearbeitungsvorgang an Materie vornimmt. Dieses Verfahren wird vorzugsweise unter Verwendung der erfindungsgemäßen Vorrichtung ausgeführt. Die Schwingungsbewegung des Werkzeuges wird umgesetzt in eine Bewegung eines Arbeit verrichtenden Elementes, wie zum Beispiel einer Schneide zur mechanischen Bearbeitung, eines Lasers zu Schneid-, Schweiß- oder Brennzwecken oder eines Reinigungselementes. Ein bevorzugter Anwendungsfall ist jedoch die mechanische Bearbeitung eines Werkstückes. Eine solche mechanische Bearbeitung eines Werkstückes kann zum Beispiel ein ultraschallunterstütztes Außendrehen, Innendrehen, Schneiden mit einem Kreismesser, Sägen mit einer Kreissäge, Fräsen mit einem Scheibenfräser oder auch ein Honvorgang sein. Beim Schneiden wird durch die Anwendung der Erfindung ein Anhaften des zu schneidenden Materials an der Schneide verhindert. Beim Sägen lässt sich ein Sägespalt mit einer Breite realisieren, die größer ist als die Breite des Sägeblattes, um trotz unverschränkter Zähne des Sägeblattes ein Verklemmen des Sägeblattes zu vermeiden. Alternativ kann das erfindungsgemäße Verfahren zur Anregung von Massen zur Behandlung von Flüssigkeiten mit Kavitation dienen.

Vorzugsweise ist bei dem erfindungsgemäßen Verfahren zur Bearbeitung eines Werkstückes die Masse als ein Drehmeißel ausgebildet, welcher ein sich drehendes Werkstück schneidet, wobei die Drehgeschwindigkeit des Werkstückes $v_C$ geringer ist als die Geschwindigkeit $v_S$ der auf Grund der Schwingung durchgeführten translatorischen Bewegung des Drehmeißels. Das heißt, dass die vorzugsweise Anwendung des erfindungsgemäßen Verfahrens das Drehen eines Werkstückes ist, wobei dabei unter dem Begriff des Drehmeißels sämtliche für Drehvorgänge einsetzbare Schneidelemente zu verstehen sind, wie zum Beispiel auch Wendeschneidplatten. Bei der Verwendung von Ultraschall als Erregerschwingung ist somit die Geschwindigkeit $v_S$ des Drehmeißels in seiner translatorischen Schwingbewegung größer einstellbar als die Drehgeschwindigkeit des Werkstückes $v_C$ an der Stelle des Eingriffs der Schneide des Drehmeißels. Bei Verwendung von Ultraschall ist somit die Drehgeschwindigkeit $v_C$ geringer zu wählen als die Schallschnelle.

Mit anderen Worten muss eine translatorische Geschwindigkeit (Schallschnelle $v_s$) der Schneidplattenspitze größer sein als die Umfangsgeschwindigkeit ($v_c$) des rotierenden Werkstückes, um eine Schnittunterbrechung zu erzeugen.

Es gilt:

$v_s$ = Schallschnelle [m/s]
$V_c$ = Umfangsgeschwindigkeit [m/s] = Schnittgeschwindigkeit
wobei die folgenden Beziehungen gelten:

$$v_c = \pi * d * n$$

mit

d= Werkstückdurchmesser [m]
n= Drehzahl [1/s]

und

$$v_s = A * \omega = A * 2 * \pi * f$$

mit

ω= Kreisfrequenz [1/s]
A= mathematische Amplitude [m]
f= Frequenz [1/s; Hz].

Erfindungsgemäß lässt sich somit ein so genanntes ultraschallunterstütztes Drehen erreichen, welches als Hybridverfahren die zeitgleiche Einkopplung einer zusätzlichen Energieform in Form einer Schwingung in die Wirkzone des Zerspanungsprozesses ermöglicht. Dadurch lässt sich mehreren Anforderungen aus der modernen Produktionstechnik gerecht werden, wie zum Beispiel der Reduzierung der Reibung bzw. der Schnittkräfte auf Grund geringerer elastischer und plastischer Verformung des Bearbeitungssystems, woraus höhere Fertigungsgenauigkeiten und eine Verringerung des Werkzeugverschleißes resultieren. Insbesondere lässt sich die Spanbildung bzw. die Schnittunterbrechung gezielt beeinflussen, zum Beispiel um Wirrspäne zu verhindern. Derartige Wirrspäne stellen für die Bedienpersonen und/oder Fertigungseinrichtungen Gesundheitsgefährdungen oder auch Gefahrenpotenziale dar. Zur gezielten Verhinderung von Wirrspänen, insbesondere bei der Bearbeitung von Materialien, die zur Wirrspanbildung neigen, lassen sich die erfindungsgemäße Vorrichtung und das erfindungsgemäße Verfahren einsetzen. Dadurch lässt sich ebenso eine Automatisierung des Fertigungsablaufes erreichen und Späne mit relativ geringem Volumen erhalten. Ein weiterer Vorteil der Erfindung liegt in der geringeren Erwärmung des Schneidwerkzeuges, wodurch die Standzeit erhöht wird und keine Wartezeiten bei weiterer manueller Bearbeitung erforderlich sind. Außerdem lässt sich die Oberflächenstruktur bei Durchführung des erfindungsgemäßen Verfahrens gezielt beeinflussen. Es lässt sich somit eine höhere Produktivität bei gleicher oder höherer Genauigkeit der Werkstücke erzielen. Insgesamt bietet die Erfindung den Vorteil der Verbesserung der Zerspanbarkeit und der Überwindung technologischer Grenzen, verbunden mit einer Leistungssteigerung.

Die vorliegende Erfindung wird im Folgenden anhand der in den beiliegenden Zeichnungen dargestellten Ausführungsbeispiele erläutert.

Es zeigt dabei

Figur 1:   eine Schnittansicht A-A einer erfindungsgemäßen Vorrichtung,

Figur 2:   eine erfindungsgemäße Vorrichtung in Ansicht von der Seite,

Figur 3:   eine schematische Darstellung des erfindungsgemäßen Verfahrens anhand von translatorischen Schwingern,

Figur 4:   eine alternative Ausgestaltung des erfindungsgemäßen Verfahrens anhand von einem System aus translatorischem Schwinger und Biegeschwinger,

Figur 5:   Darstellung eines Drehvorgangs.

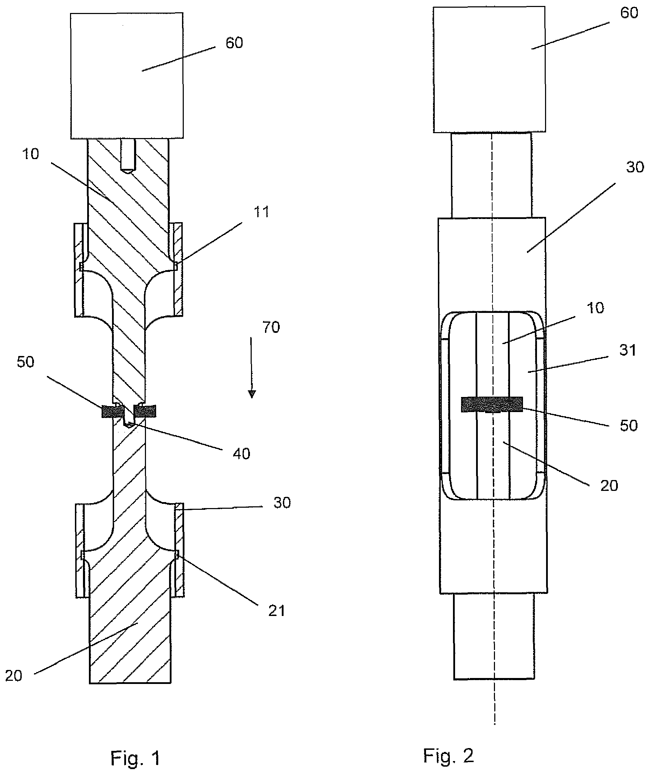

In Figur 1 ist eine erfindungsgemäße Vorrichtung zur Erzeugung einer schwingenden Bewegung einer Masse 50 in einem Schnitt A-A dargestellt, wobei der Schnittverlauf aus Figur 2 ersichtlich ist. Die Vorrichtung umfasst einen ersten Spannkörper 10 sowie einen zweiten Spannkörper 20, wobei zwischen diesen Spannkörpern 10, 20 die Masse 50 eingespannt angeordnet ist. Die Masse 50 kann dabei zum Beispiel als ein Werkzeug, wie weiter unten noch beschrieben werden wird, ausgestaltet sein. Zur Realisierung einer formschlüssigen Aufnahme der Masse 50 ist zwischen den Spannkörpern 10, 20 eine mechanische Verbindung 40 eingerichtet, die vom ersten Spannkörper 10 in den zweiten Spannkörper 20 ragt. Die mechanische Verbindung 40 kann dabei zum Beispiel als eine Schraubverbindung ausgestaltet sein. In diesem Fall wird durch die mechanische Verbindung 40 nicht nur eine formschlüssige Fixierung der Masse 50 erreicht, sondern auch eine kraftschlüssige Fixierung. Die beiden Spannkörper 10, 20 sind über eine Spannhülse 30, wie sie insbesondere aus Figur 2 ersichtlich ist, miteinander mechanisch verbunden. Die Spannhülse 30 ist dabei mit einem ersten Gewindeabsatz 11 am ersten Spannkörper 10 und mit einem zweiten Gewindeabsatz 21 am zweiten Spannkörper 20 mechanisch in Eingriff gebracht. Damit sind, unabhängig von der mechanischen Verbindung 40, die Spannkörper 10, 20 über die Spannhülse 30 mechanisch miteinander verbunden. Durch die Befestigung auf den Gewindeabsätzen 11, 21 lässt sich durch Verdrehung der Spannhülse 30 eine Spannkraft auf die Spannkörper 10, 20 ausüben, so dass die Masse 50 zwischen den Spannkörpern 10, 20 von entgegengerichteten Druckkräften beaufschlagt wird. Am ersten Spannkörper 10 ist ein Schwingungserzeuger 60, zum Beispiel ein Ultraschallwandler, angeordnet. Dieser Schwingungserzeuger 60 erzeugt zum Beispiel eine stehende, longitudinale Welle. Durch die Ausgestaltung wenigstens des ersten Spannkörpers 10 und des zweiten Spannkörpers 20 als Resonanzsystem werden diese Spannkörper 10, 20 bei Erzeugung einer Erregerfrequenz, die mit der Resonanzfrequenz des Resonanzsystems übereinstimmt, derart erregt, dass sie longitudinal in Schwingungsausbreitungsrichtung 70 schwingen. Dies führt zu einer oszillierenden Bewegung der Masse 50.

Dabei kann, wie oben bereits beschrieben, das Resonanzsystem, welches durch die Erregerschwingung erregt wird, lediglich durch die Spannkörper 10, 20 ausgebildet sein, oder durch die Spannkörper 10, 20 zusammen mit der Masse 50 ausgebildet sein. In der Ausgestaltung, in der das Resonanzsystem lediglich durch die Spannkörper 10, 20 ausgebildet ist, wird die Masse 50 nur durch eine jeweilige auf sie wirkende Druckkraft von einem der Spannkörper 10, 20 mitgenommen und führt derart ebenfalls eine schwingende Bewegung aus. In der Ausgestaltung, in der die Masse 50 ein Bestandteil des Resonanzsystems ist, werden die Spannkörper 10, 20 sowie die Masse 50 erregt, so dass sie synchron schwingen.

In Figur 2 ist ersichtlich, dass die mechanische Verbindung 40 nicht auf die in Figur 1 dargestellte Ausführungsform beschränkt ist, sondern dass auch vorgesehen sein kann, dass die Masse 50 mit einem Formelement ausgestaltet ist, welches form- und/oder kraftschlüssig mit wenigstens einem der Spannkörper 10, 20 verbunden ist. Die Spannhülse 30 weist bevorzugt die in Figur 2 dargestellte Öffnung 31 auf, um die Übertragung der oszillierenden Bewegung der Masse 50 auf ein neben der Vorrichtung angeordnetes Werkstück zu ermöglichen.

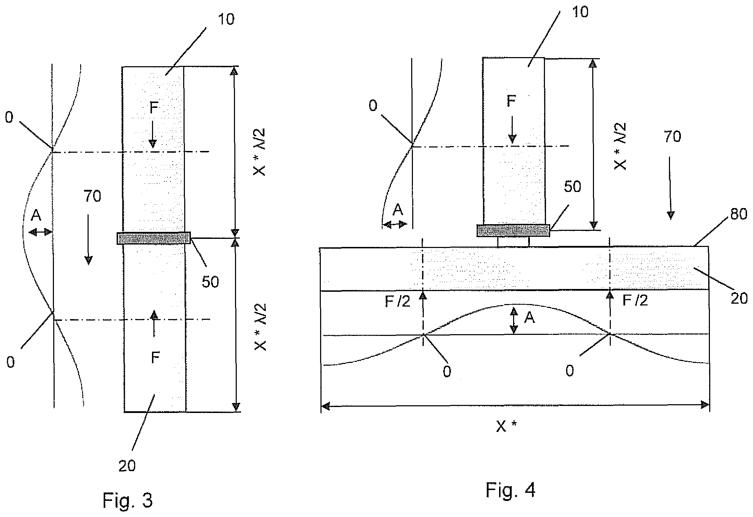

In den Figuren 3 und 4 sind die Spannkörper 10, 20 mit der Masse 50 dargestellt, wobei zur Erläuterung des Verfahrens auch der Schwingungsverlauf neben den Spannkörpern 10, 20 angezeigt ist.

Wie in Figur 3 ersichtlich ist, werden zwei resonante Spannkörper 10, 20 Anpresskräften F ausgesetzt, so dass die zwischen den Spannkörpern 10, 20 angeordnete Masse 50 mit diesen Kräften F beaufschlagt ist. Das heißt, dass auf die schwingenden Materialien eine Druckbelastung wirkt. Die Stellen der Einleitung der Anpresskräfte F in die Spannungskörper 10, 20 entsprechen den Null-Stellen bzw. Schwingungsknoten 0, die die daneben dargestellte Welle aufweisen.

Bezogen auf Figur 1 bedeutet das, dass die Position des ersten Gewindeabsatzes 11 sowie des zweiten Gewindeabsatzes 21 die Stellen der Einleitung der Anpresskräfte F sind und dabei gleichzeitig an den Null-Stellen bzw. Schwingungsknoten 0 angeordnet sind. Es ist ersichtlich, dass sich die Masse 50 im Bereich der Amplitude A befindet. Somit wird bei Einleitung einer Schwingung, wie zum Beispiel Ultraschall in das Resonanzsystem erreicht, dass die Stellen der Einspannung, nämlich die Gewindeabsätze 11 und 21 im Wesentlichen nicht den Schwingungen unterworfen sind, jedoch der Bereich der Einspannung der Masse 50 bei Resonanzverhalten in Schwingungsausbreitungsrichtung 70 schwingt. Ersichtlich ist dies auch daraus, dass die Stellen der Einleitung der Anpresskräfte in der Mitte einer jeweiligen halben Wellenlänge λ angeordnet sind, wobei x für eine ganze Zahl von Wellenlängen steht.

Selbst wenn die Spannkörper 10, 20 mit einer mechanischen Verbindung 40 verbunden sein sollten, liegt keine Zugbelastung an den schwingenden Teilen vor. Bei Anordnung einer mechanischen Verbindung 40 lässt sich eine Zugbelastung schon dadurch ausschließen, dass eine Anpresskraft durch die mechanische Verbindung 40 und/oder durch die Spannhülse 30 erzeugt wird, die größer einstellbar ist als die jeweilige Trägheitskraft des zu beschleunigenden Körpers. Das heißt, dass lediglich die technischen Grenzen durch die zulässigen Druck- bzw. Knickspannungen definiert sind. Wie bereits erwähnt, sind bei den meisten Materialien die zulässigen Druckspannungen wesentlich höher als die zulässigen Zugspannungen. Daraus ergibt sich, dass schwerere Massen und/oder Massen mit höherer Frequenz und/oder Amplitude beschleunigt werden können als es bei herkömmlichen Verfahren und Vorrichtungen der Fall ist. Dadurch lassen sich Bearbeitungsparameter wesentlich erhöhen, wodurch die Produktivität steigerbar ist.

Neben der gezeigten mechanischen Verspannung der Spannkörper 10, 20 mittels der Spannhülse 30 lassen sich alternativ noch weitere Möglichkeiten, die Spannkörper 10, 20 mit den Anpresskräften F zu beaufschlagen, realisieren, wie zum Beispiel eine hydraulische oder pneumatische Druckbeaufschlagung.

Der Einfluss der Masse 50 auf die Resonanzfrequenz ist zu berücksichtigen und gegebenenfalls durch geometrische Anpassungen des Resonanzsystems zu kompensieren. Eine solche Anpassungsmaßnahme kann zum Beispiel die Verkürzung eines oder beider Spannkörper 10, 20 um die Dicke der Masse 50 sein, so dass die Masse 50 ein Bestandteil eines oder beider Spannkörper 10, 20 und damit ebenfalls ein Bestandteil des Resonanzsystems ist. Das heißt, es können auch Teile der Masse je nach Spannkraft rechnerisch mit in die Masse der Spannkörper übergehen, so dass sich die zu beschleunigende Masse m reduziert.

Die Anpresskraft muss immer größer sein als die Beschleunigungskraft, um eine lose Ankopplung der Masse 50 zu vermeiden. Aus der nachfolgenden Berechnung wird deutlich, welche technologischen Größen erfindungsgemäß optimiert werden können.

Es wird angestrebt: $F_b < F_a$

mit

$F_a$= Anpresskraft [N]
$F_b$= Beschleunigungskraft [N].

Die Beschleunigungskraft $F_b$ berechnet sich:

$$F_b = m * a$$

mit

m = Masse [kg]
a= Beschleunigung [m/s$^2$].

Dabei besteht der folgende Zusammenhang:

$$a = r * \omega^2 = A * (2 * \pi * f)^2$$

mit

r= Radius [m]
$\omega$= Kreisfrequenz [1/s]
A= mathematische Amplitude [m]
f= Frequenz [1/s; Hz])

Daraus ergibt sich:

$$F_b = m * A * (2 * \pi * f)^2$$

Wenn $F_a$ aus der zulässigen Spannung ermittelt worden ist ergibt sich die mögliche zu erreichende Amplitude somit aus:

$$A = \frac{F_a}{m * (2 * \pi * f)^2}$$

In einer Umstellung nach der Frequenz lässt sich die maximale Frequenz aus dem dargestellten mathematischen Zusammenhang ermitteln.

Praktikable Amplituden sind z.B. im Bereich von 30-50 $\mu$m, vorzugsweise 40 $\mu$m, bei einer Frequenz von 20-30 kHz, insbesondere bei 26 kHz.

In Figur 4 ist eine erfindungsgemäße Vorrichtung dargestellt, bei der der erste Spannkörper 10 als ein translatorischer Schwinger und der zweite Spannkörper 20 als ein Biegeschwinger 80 ausgestaltet ist. Das heißt, dass der erste Spannkörper 10 eine longitudinale Schwingung ausführt und der zweite Spannkörper 20 eine transversale Schwingung. Wie aus dem Schwingungsverlauf zum zweiten Spannkörper 20 ersichtlich ist, sind die Anpresskräfte F auch beim Biegeschwinger 80 an den jeweiligen Null-Stellen bzw. Schwingungsknoten 0 angesetzt. Im Resultat führt die Masse 50 dieselbe translatorische Schwingung durch wie bei einem reinen translatorischen Schwingungssystem gemäß Figur 3.

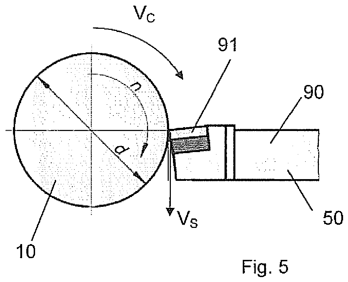

In Figur 5 ist eine bevorzugte Anwendung des erfindungsgemäßen Verfahrens und der erfindungsgemäßen Vorrichtung dargestellt, bei der die Masse 50 als ein Werkzeug 90 in Form eines Drehmeißels ausgebildet ist. Die Schneide 91 des Drehmeißels steht mit einem sich drehenden Werkstück 100 im Eingriff. Der Umfang des Werkstückes 100 dreht sich mit einer Drehgeschwindigkeit $v_C$. Durch die oszillierende Bewegung des Drehmeißels 90 mit einer Werkzeuggeschwindigkeit $v_S$ wird insbesondere bei einem Ausschlag in Richtung der in Figur 5 dargestellten Werkzeuggeschwindigkeit $v_S$ erreicht, dass in einer bestimmten Zeitspanne im Wesentlichen keine Relativbewegung zwischen Schneide 91 und Umfang des Werkstückes 100 stattfindet. Bei Umkehrung der translatorischen Bewegung des Werkzeuges 90 erfolgt eine Relativbewegung mit einer Geschwindigkeit, die der Summe der Drehgeschwindigkeit $v_C$ und der Werkzeuggeschwindigkeit $v_S$ entspricht. Dadurch wird die Bildung eines Wirrspanes bzw. Fließspanes verhindert und ein relativ kurzer Span erzeugt. Diese Spanform hat den Vorteil eines geringeren umhüllenden Volumens, so dass weniger Transportkapazität für den Abtransport der Späne bereitzustellen ist. Außerdem wird auf Grund des nur zeitweiligen und ständig unterbrochenen Schnittes erreicht, dass sich das Werkzeug 90 relativ wenig erwärmt, wodurch die Standzeit erhöht wird.

Dadurch, dass lediglich Druckkräfte auf das Werkzeug 90 wirken, sind die Kräfte, die auf das Werkzeug 90 wirken, dementsprechend hoch einstellbar. Da die größten bei der Schwingung auf das Werkzeug 90 wirkenden Kräfte die Trägheitskräfte sind, kann das Werkzeug 90 eine entsprechend große Masse haben und/oder mit einer entsprechend hohen Frequenz und hoher Amplitude A bewegt werden. Dies ermöglicht den Einsatz eines Ultraschallwandlers als Schwingungserzeuger 60, der Werkzeuggeschwindigkeiten $v_S$ mit Schallschnelle ermöglicht. Dementsprechend hoch kann die Drehgeschwindigkeit $v_C$ des Werkstückes 100 eingestellt werden, die von der Drehzahl sowie vom Durchmesser d des Werkstückes 100 abhängig ist. Daraus wiederum ergibt sich die Möglichkeit, sehr hohe Schnittgeschwindigkeiten zu fahren, einen relativ hohen Vorschub einzustellen sowie relativ große Werkstücke 100 bearbeiten zu können.

Bezugszeichenliste

| 10 | Erster Spannkörper |
| 11 | Erster Gewindeabsatz |
| 20 | Zweiter Spannkörper |
| 21 | Zweiter Gewindeabsatz |
| 30 | Spannhülse |
| 31 | Öffnung |
| 40 | mechanische Verbindung |
| 50 | Masse |
| 60 | Schwingungserzeuger |
| 70 | Schwingungsausbreitungsrichtung |
| 80 | Biegeschwinger |
| 90 | Werkzeug, Drehmeißel |
| 91 | Schneide |
| 100 | Werkstück |
| A | Amplitude |
| 0 | Null-Stelle, Schwingungsknoten |
| F | Anpresskraft |
| $\lambda$ | Wellenlänge |
| $v_c$ | Drehgeschwindigkeit |
| d | Werkstückdurchmesser |
| $v_s$ | Werkzeug-Geschwindigkeit |

**Patentansprüche**

1. Verfahren zur Erzeugung einer schwingenden Bewegung eines Werkzeuges (90), wobei das Werkzeug (90) in Schwingungsausbreitungsrichtung zwischen wenigstens zwei Spannkörpern mit diesen mechanisch verbunden ist und das Werkzeug (90) von beiden Spannkörpern (10, 20) mit Anpresskraft (F) beaufschlagt so eingespannt ist, dass an dem Werkzeug (90) keine Zugkräfte auftreten sondern ausschließlich Druckkräfte auf das Werkzeug (90) wirken, und zumindest die Spannkörper als Bestandteil eines Resonanzsystems ausgebildet sind, und in das Resonanzsystem eine Erregerschwingung eingeleitet wird, deren Frequenz mit der Resonanzfrequenz des Resonanzsystems im Wesentlichen übereinstimmt, so dass das Resonanzsystem schwingt, wobei die Erregerschwingung als eine stehende Welle erzeugt wird, wobei die Anpresskraft (F) an einer schwingungsfreien Stelle (0) der Spannkörper (10, 20) in diese eingeleitet wird.

2. Verfahren nach Anspruch 1, bei dem das Resonanzsystem durch die Spannkörper (10, 20) und das Werkzeug (90) ausgebildet ist, so dass die Spannkörper (10, 20) und das Werkzeug (90) von der Erregerschwingung erregt werden.

3. Verfahren nach Anspruch 1 oder 2, **dadurch gekennzeichnet, dass** die Anpresskraft (F) größer eingestellt wird als eine Trägheitskraft des schwingenden Werkzeuges (90).

4. Vorrichtung zur Erzeugung einer schwingenden Bewegung eines Werkzeuges (90), umfassend das Werkzeug (90) und ein Resonanzsystem, mit dem das Werkzeug (90) beschleunigbar ist, sowie einen Schwingungserzeuger (60), mit dem eine einer stehenden Welle entsprechende Erregerschwingung erzeugbar ist, deren Frequenz mit der Resonanzfrequenz des Resonanzsystems im Wesentlichen übereinstimmt, wobei Bestandteil des Resonanzsystems wenigstens zwei Spannkörper (10, 20) sind, mit denen das Werkzeug (90) derart mechanisch verbunden ist, so dass das Werkzeug (90) zwischen den Spannkörpern (10, 20) fixiert ist, wobei das Werkzeug (90) von beiden Spannkörpern (10, 20) mit Anpresskraft (F) beaufschlagt so eingespannt ist, dass an dem Werkzeug (90) keine Zugkräfte auftreten sondern ausschließlich Druckkräfte auf das Werkzeug (90) wirken, wobei Stellen der Einleitung der Anpresskraft (F) in die Spannkörper (10, 20) an einer im Betrieb der Vorrichtung schwingungsfreien Stelle (0) angeordnet sind.

5. Vorrichtung nach Anspruch 4, bei der zwischen den Spannkörpern (10, 20) eine mechanische Verbindung, mit der Zugkraft übertragbar ist, angeordnet ist.

6. Vorrichtung nach Anspruch 4 oder 5, bei der beide Spannkörper (10, 20) als translatorische Schwinger ausgebildet sind.

7. Vorrichtung nach Anspruch 4 oder 5, bei der wenigstens einer der Spannkörper (10, 20) als Biegeschwinger (80) ausgebildet ist.

8. Verfahren zur Bearbeitung von fester oder flüssiger Materie unter Anwendung des Verfahrens gemäß einem der Ansprüche 1 bis 3, wobei das Werkzeug (90) auf Grund seiner schwingenden Bewegung einen Bearbeitungsvorgang an der Materie vornimmt.

9. Verfahren nach Anspruch 8, bei dem ein Werkstück aus fester Materie bearbeitet wird und bei dem das Werkzeug (90) als ein Drehmeißel (90) ausgebildet ist, welcher ein sich drehendes Werkstück (100) schneidet, wobei die Drehgeschwindigkeit ($v_c$) des Werkstückes (100) geringer ist als die Geschwindigkeit ($v_s$) der auf Grund der Schwingung durchgeführten translatorischen Bewegung des Drehmeißels (90).

**Claims**

1. A method for generating a vibrating motion of a tool (90), wherein the tool (90) is mechanically connected to at least two clamping bodies between said clamping bodies in the vibration propagation direction and the tool (90) is clamped in by the two clamping bodies (10, 20) under the application of a pressing force (F), in such a way that no tractive forces occur on the tool (90), but exclusively compressive forces act on the tool (90), and at least the clamping bodies are designed as a component of a resonance system, and there is introduced into the resonance system an excitation vibration, the frequency of which substantially corresponds to the resonance frequency of the resonance system, so that the resonance system vibrates, wherein the excitation vibration is generated as a standing wave, wherein the pressing force (F) is introduced at a vibration-free point (0) of the clamping bodies (10, 20) into the latter.

2. The method according to claim 1, wherein the resonance system is constituted by the clamping bodies (10, 20) and the tool (90), so that the clamping bodies (10, 20) and the tool (90) are excited by the excitation vibration.

3. The method according to claim 1 or 2, **characterised in that** the pressing force (F) is set greater than an inertia force of the vibrating tool (90).

**4.** A device for generating a vibrating motion of a tool (90), comprising

the tool (90) and a resonance system, with which the tool (90) can be accelerated, and a vibration generator (60), with which an excitation vibration corresponding to a standing wave can be generated, the frequency of which substantially corresponds to the resonance frequency of the resonance system, wherein at least two clamping bodies (10, 20) are a component of the resonance system, to which the tool (90) is connected mechanically, so that the tool (90) is fixed between the clamping bodies (10, 20), wherein the tool (90) is clamped in by the two clamping bodies (10, 20) under the application of a pressing force (F), in such a way that no tractive forces occur on the tool (90), but exclusively compressive forces act on the tool (90), wherein points for the introduction of the pressing force (F) into the clamping bodies (10, 20) are arranged at a point (0) that is free from vibration during operation of the device.

**5.** The device according to claim 4, wherein a mechanical connection, with which tractive force can be transferred, is arranged between the clamping bodies (10, 20).

**6.** The device according to claim 4 or 5, wherein both clamping bodies (10, 20) are designed as translatory vibrators.

**7.** The device according to claim 4 or 5, wherein at least one of the clamping bodies (10, 20) is designed as a flexural vibrator (80).

**8.** A method for processing solid or liquid matter using the method according to any one of claims 1 to 3, wherein the tool (90) performs a processing method on the matter due to its vibrating motion.

**9.** The method according to claim 8, wherein a workpiece made of solid matter is processed and wherein the tool (90) is designed as a turning tool (90), which cuts a rotating workpiece (100), wherein the rotational speed ($v_c$) of the workpiece is less than the speed ($v_s$) of the translatory motion of the turning tool (90) performed due to the vibration.


**Revendications**

**1.** Procédé, destiné à générer un mouvement vibratoire d'un outil (90), dans la direction de déploiement de la vibration, l'outil (90) étant mécaniquement assemblé avec deux corps de serrage entre ces derniers et l'outil (90), soumis par les deux corps de serrage (10, 20) à une force de contact (F) étant enserré de telle sorte qu'aucune force de traction ne soit exercée sur l'outil (90) mais qu'uniquement des forces de pression agissent sur l'outil (90), et au moins les corps de serrage étant conçus sous la forme d'éléments constitutifs d'un système de résonance et dans le système de résonance étant introduite une vibration d'excitation dont la fréquence concorde sensiblement avec la fréquence de résonance du système de résonance, de sorte que le système de résonance vibre, la vibration d'excitation étant générée sous la forme d'une onde stationnaire, la force de contact (F) étant introduite dans le corps de serrage (10, 20) en un point (0) exempt de vibration de celui-ci.

**2.** Procédé selon la revendication 1, lors duquel le système de résonance est créé par le corps de serrage (10, 20) et l'outil (90), de sorte que le corps de serrage (10, 20) et l'outil (90) soient excités par la vibration d'excitation.

**3.** Procédé selon la revendication 1 ou 2, **caractérisé en ce que** l'on règle la force de contact (F) à une valeur supérieure à celle d'une force d'inertie de l'outil (90) en vibration.

**4.** Dispositif, destiné à générer un mouvement vibratoire d'un outil (90), comprenant

l'outil (90) et un système de résonance, à l'aide duquel l'outil (90) peut être accéléré, ainsi qu'un générateur de vibrations (60), susceptible de générer une vibration d'excitation correspondant à une onde stationnaire, dont la fréquence concorde sensiblement avec la fréquence de résonance du système de résonance, au moins deux corps de serrage (10, 20) avec lesquels l'outil (90) est mécaniquement assemblé, de telle sorte que l'outil (90) soit fixé entre les corps de serrage (10, 20) étant un élément constitutif du système de résonance, l'outil (90), soumis par les deux corps de serrage (10, 20) à une force de contact (F) étant enserré de telle sorte qu'aucune force de traction ne soit exercée sur l'outil (90), mais qu'uniquement des forces de pression agissent sur l'outil (90)

des points de l'introduction de la force de contact (F) dans les corps de serrage (10, 20) étant placés sur un point (0) exempt de vibrations pendant le fonctionnement du dispositif.

**5.** Dispositif selon la revendication 4, sur lequel ente les corps de serrage (10, 20) est placé un assemblage mécanique, par lequel une force de traction est transmissible.

**6.** Dispositif selon la revendication 4 ou 5, sur lequel les deux corps de serrage (10, 20) sont conçus sous la forme de vibrateurs en translation.

**7.** Dispositif selon la revendication 4 ou 5, sur lequel au moins l'un des corps de serrage (10, 20) est conçu sous la forme d'un vibrateur en flexion (80).

**8.** Procédé, destiné à usiner des matières solides ou liquides en utilisant le procédé selon l'une quelconque des revendications 1 à 3, du fait de son mouvement vibratoire, l'outil (90) procédant à un processus d'usinage sur la matière.

**9.** Procédé selon la revendication 8, lors duquel l'on usine une pièce d'œuvre en une matière solide et lors duquel l'outil (90) est conçu sous la forme d'un outil de tournage (90), lequel coupe une pièce d'œuvre (100) en rotation, la vitesse de rotation ($v_c$) de la pièce d'œuvre (100) étant inférieure à la vitesse ($v_s$) du mouvement en translation de l'outil de tournage (90) réalisé du fait de la vibration.

Fig. 1

Fig. 2

Fig. 4

Fig. 3

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10027264 C5
- US 2004245893 A1